# EUROPEAN PATENT APPLICATION

(11) **EP 4 414 798 A1**
(43) Date of publication of application: **14.08.2024**
(21) Application number: 24156969.8
(22) Date of filing: 11.02.2024
(51) Int. Cl.: G05B 19/048, B67D 1/08

(54) **SYSTEM FOR MONITORING AND REGULATING RESTAURANT EQUIPMENT, ESPECIALLY TAP AND COOLING EQUIPMENT AND MONITORING THE CONDITION OF TAP PIPING**

(30) Priority: 11.02.2023 CZ 202340732 U
(71) Applicant: Pro-Zeta a.s., 10800 Praha 108 (CZ)
(72) Inventor: PURS, Jiri, 16000 Praha 6, Bubenec (CZ)
(74) Representative: Kratochvil, Vaclav

(57) **Abstract**

A system for monitoring and regulating restaurant equipment and monitoring the condition of tap piping including at least one main unit (47) comprising a main processor (6), wherein the main unit (47) is connected to at least one sensor selected from a group consisting of a probe thermometer, ultrasonic flowmeter, mechanical flowmeter, thermometer, pressure sensor, wherein at least one main unit (47) is connected to a processing unit (41) comprising a database (42), wherein the processing unit (41) is implemented for processing data from individual main units (47) and for storing data and accessing stored data, and provided with tools for remote data management and visualization.

## Description

### Field of the Invention

The technical solution relates to a system for monitoring and regulating restaurant equipment, especially tap and cooling equipment and monitoring the condition of the tap piping. The system uses Internet of Things (IoT) technologies to monitor, evaluate and regulate operational variables, especially in restaurant facilities and brewing operations.

### Background of the Invention

At present, the state of the technology used in the restaurant and brewing operations is based mainly on the analogue-mechanical principle of regulation and monitoring of tap equipment of various types and embodiments. The characteristics of this equipment are a design that lacks any elements of automation, there is minimal use of intelligent sensors, lack of interconnection of these systems with computer systems.

Existing technology on the analogue-mechanical principle does not allow to easily perform remote monitoring of operating variables and analysis over them. Remote administration is also difficult, if not impossible, and possible interventions in the functioning of the system do not require human intervention on-site.

Existing technologies do not allow sensors and controls to be effectively combined into computing systems.

### Summary of the Invention

The aforementioned deficiencies are largely eliminated by a system for monitoring and regulating restaurant equipment, in particular tap and cooling equipment and monitoring the condition of tap piping, according to the present invention. Its essence is that it contains at least one main unit to which at least one sensor selected from the group consisting of a probe thermometer, ultrasonic flowmeter, mechanical flowmeter, thermometer, pressure sensor is connected, wherein at least one main unit is connected to a processing unit with a database, for storing data and accessing stored data, and a remote data management and visualization tool.

An additional sensor/actuator selected from the group consisting of a hygrometer, thermostatic controller, barrel tapping detector and relay for switching appliances and support for switching pumps, valves and switches for carrying out automatic sanitation are preferably connected to at least one main unit. The system is preferably equipped with a backup power supply.

The ultrasonic flowmeter preferably has support for automatic detection of performed sanitation of the tap piping and support for automatic counting of sanitation sponges, insertable into the tap piping.

In a preferred embodiment, at least one main unit has support for remote updating of the unit firmware and/or connected sensors that support this functionality.

The system may be provided with command support for performing basic automation and/or diagnostics, and/or control of connected actuators.

Preferably, at least one of the sensors connectable to at least one main unit has technology for reading data from the sensor, without the need for explicit support on the main unit side.

At least one main unit is preferably provided with a tool for encrypting the transmitted data, and the processing unit has a tool for verifying the identity of individual main units, and vice versa, these have a tool for verifying the identity of the processing unit. The main unit and the processing unit can have tools to remotely adjust the range of system functionality. The main units are preferably provided with an internal storage for storing measured quantities at the time of a connection failure for subsequent sending to the processing unit.

From a hardware point of view, the solution consists of main units, sensors and peripherals connected to these units. Sensors include an ultrasonic flow meter, mechanical flow meter, probe thermometer for accurate temperature monitoring inside a bundle of pipes for draught beverage distribution, humidity sensor, temperature sensors, pressure sensor, thermostatic controller, barrel tapping detector and more. These sensors are connected to the main unit via wiring.

The units collect data from connected sensors and send it to a remote server having the form of a processing unit. This provides data storage in the database for later visualization, analytics and processing, and also allows access to this data for mobile and desktop applications and provides basic functionality for remote management.

The solution also includes support for switching pumps, valves and switches for automatic sanitation. Optionally, the main unit can also be supplemented with a module to provide backup power.

The equipment is an loT system for remote monitoring of restaurant equipment and for automation of tap and cooling equipment. The system allows the collection of data from the tap equipment, such as data on beer draughting, temperatures on the individual parts of the tap and cooling unit, fluid flow velocity inside the cooling unit, humidity, energy consumption, etc. The collected data can be further displayed and analyzed. Based on the obtained data, it can detect events such as sanitizing, barrel tapping, temperature changes and a failure of the cooling equipment, etc. This allows the system to ensure high quality of draught beverages and operational savings. It includes a unique ultrasonic flowmeter that contains components of simplified spectral analysis of the passing fluid and also belongs to the category for use in the food industry. The system works with barrels and tanks of all sizes and volumes. By using the solution, electricity savings in the form of intelligent control of the cooling unit can be achieved, it allows automated chemical sanitation by controlling the connected equipment, includes a barrel tapping sensor, it switches to its own backup source when disconnected from the power source. Communication of the unit with superior systems is encrypted and enables communication with Wi-Fi and GSM/LTE technologies. If connectivity is lost, the unit collects the data in its internal memory and then sends the data to the parent system when the connection is restored. The unit includes an LCD display for status information with IP67 rating. The system also includes an expansion module, so-called multiplexer, also MUX, with 8 ports also with IP67 rating. The system can be used with current tap equipment working with both barrels and tanks, and also maintains the standard of connecting tubes using hose quick couplings, for example of the John-Guest type.

It is a comprehensive installation that allows to extend existing analogue-mechanical tap equipment with the possibility of remote monitoring, access and management. The system allows automated sanitation, thermostat control, i.e. the cooling part of the tap equipment, transmits information about operating temperatures and quantities such as beer and coolant temperature, coolant flow velocity in the cooling equipment, pressure in the beer distribution pipes, allows to measure the energy consumption of the equipment and has an integrated tapped-barrel counter. The whole solution is adapted for operation in IP67 category. The system can be backed up for more than 12 hours. The equipment communicates with the superior system, i.e. the processing unit, via LTE, GSM and/or Wi-Fi. The equipment security is ensured by application of transmission encryption. The entire system can be remotely monitored and firmware can be upgraded.

Another advantage is the automation of the tap equipment consisting in the functional integration of the thermostat control and has a direct impact in the area of energy savings in the operation of the cooling equipment, the automation of sanitation has an impact in the cost savings in the performance of chemical sanitation, and the comprehensive sensor monitoring of the cooling equipment has a direct impact on the reduction of the cost of servicing the equipment.

### Explanation of Drawings

The system for monitoring and regulating restaurant equipment according to this technical solution will be described in more detail on a particular embodiment using the accompanying drawings, where in Fig. 1 is the main unit in the top view. Fig. 2 is a block diagram describing individual parts of the main unit of the system. Fig. 3 is a block diagram describing individual parts of a mechanical flowmeter, i.e. a sensor intended to be connected to the main unit. Fig. 4 is a block diagram describing individual parts of the ultrasonic flowmeter, i.e. the sensor intended to be connected to the main unit. Fig. 5 is a block diagram describing the link between the processing unit and other sub-parts of the system and the related architecture and infrastructure. Fig. 6 is a block diagram showing the connection of the main unit of the system in one restaurant and Fig. 7 is a block diagram describing individual parts of the probe thermometer, i.e. the sensor intended to be connected to the main unit.

### Exemplary Embodiments of the Invention

An exemplary system for monitoring and regulating restaurant equipment, in particular tap and cooling equipment and monitoring the condition of tap piping, includes two main units 47 to which sensors in the form of a recess thermometer, ultrasonic flow meter, mechanical flow meter, thermometer and pressure sensor are connected, wherein the main units 47 are connected to a processing unit 41 with a database 42, for storing and accessing stored data and a remote data management and visualization tool. Additional sensors/actuators are connected to the main units 47 in the form of a hygrometer, thermostatic controller, barrel tapping detector and relay for switching appliances. Support for switching pumps, valves and switches for automatic sanitation is connected to the main units 47.

The system is equipped with backup power supply 50. The ultrasonic flowmeter has support for automatic detection of performed sanitation of the tap piping and support for automatic counting of sanitation sponges, insertable into the tap piping.

At least one master unit 47 has support for remotely updating the unit firmware and/or connected sensors that support this functionality. The system is equipped with command support for performing basic automation and/or diagnostics, and/or control of connected actuators. Sensors connectable to main units 47 have the technology to read data from the sensor, without the need to explicitly provide support on the side of the main unit 47. The main units 47 are provided with a tool for encrypting the transmitted data, and the processing unit 41 has a tool for verifying the identity of the individual main units 47, and vice versa, these have a tool for verifying the identity of the processing unit 41. The main unit 47 and the processing unit 41 have tools for remotely adjusting the range of system functionality. The main units 47 have an internal storage for storing measured quantities at the time of a connection failure for subsequent sending to the processing unit 41.

The system consists of main units 47 and sensors connected to them, processing unit technologies and tools for remote data management and visualization. The main units 47 themselves are then provided with a main processor 6, a display 2 and a mux board 18, to which the individual sensors are connected. The sensor configuration itself is optional and customizable for each main unit 47 based on end customer's requirements. In addition to sensors, various actuators can also be connected to the mux board 18 of the main unit 47, providing support for switching pumps, valves and switches for automatic sanitation. The main unit 47 can also be optionally extended with a backup power system 50.

The following list is a summary of individual system components and an outline of their functionality. A more detailed description of the system functionality can be found below.

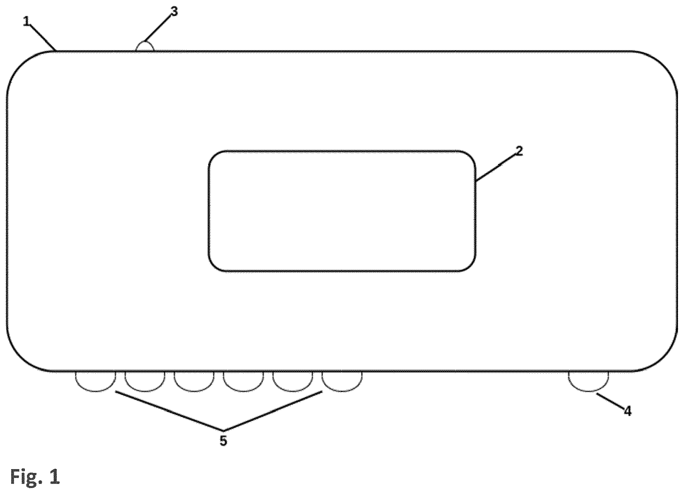

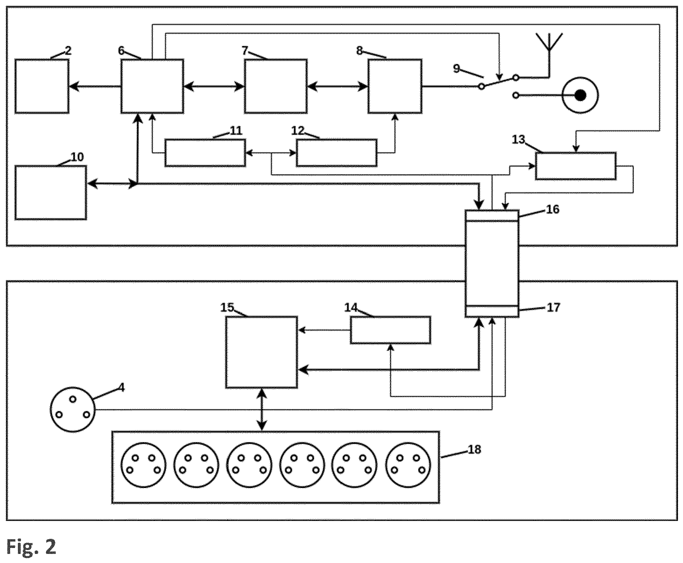

Main unit 47 in Fig. 1 and Fig. 2:
a) Sensor data acquisition, data interpretation, integrity checking, verification
b) Telemetry data collection - connection quality, power grid availability, etc.
c) Comprehensive connection management
d) Ensuring robust data collection - storage in the event of a connection failure
e) Remote access system
   i) Support for multiple clients
   ii) Possibility of automation
f) Ensuring encryption of communication with the processing unit
g) License management
h) Provision of diagnostic tools - operating records system
i) Display of operational information on the display
j) Actuator operation - switching of pumps, sockets, valves
k) Collecting and providing technical and logistical information towards the processing unit - Hardware revisions + sensor firmware versions and more
l) Providing support for OTA update of sensors and units themselves; ensuring the possibility of reverting to the old version in case of problems
m) Settings management

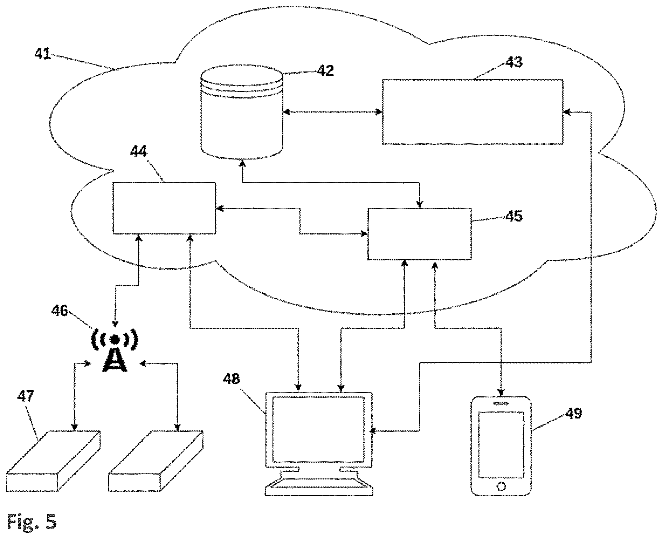

Processing unit 41, Fig. 5:
a) Support for writing, editing and displaying logistic information, i.e. installation location of individual units, hardware revision of individual units and connected sensors, software version, etc.
b) Storage of metrics and granting of access to metrics for frontend applications
c) Storage of operating logs of units, granting access to logs
d) User account management
e) Provision of network infrastructure to send requests from frontend applications to unit (mqtt broker)
f) Analytics over measured data, event detection system
3) Frontend application
a) PC application for unit management using processing unit - adding units, modifying logistic data, displaying sensor data
b) PC application for displaying and searching operational records
c) PC application to manage settings, import and export unit settings
d) PC application for OTA updates of the main unit and sensors
e) PC application for general remote access via command line
f) PC application for testing hardware/software units
g) PC application for performing automated tests of actual hardware
h) Mobile application for displaying data from tap equipment
4) Sensors and actuators
a) Temperature sensor
b) Probe temperature sensor
c) Mechanical flowmeter
d) Humidity and temperature sensor
e) Pressure sensor
f) Barrel tapping detector
g) Module to support automatic sanitation
h) Module for thermostatic control of cooling equipment and monitoring of electricity consumption
i) Ultrasonic flowmeter with integrated support for detection of performed sanitation
j) Backup power supply system
k) Internal quality assurance systems

The following is a more detailed description of the functionality of individual parts of the system.

Overview of whole system functionality

The main units 47 of the system and their sensors 53 are mounted in restaurants. These monitor operating variables such as temperatures, beer draughting and more. The specific configuration of the sensors, i.e. how many sensors are connected to the main unit 47, depends on the operating conditions of the restaurant, such as the number of taps, their type, etc., and customer requirements. The values collected from sensors 53 are then sent to the processing unit 41, where they are stored in the database 42. From there, they can be viewed using a mobile application 49 or some management applications 48. Management applications 48 also allow direct command input to specific master units 47 and additional unit control.

The main unit 47 contains two separate printed circuit boards which are connected by a flat-flex connector 16, 17. Both boards are fitted with components only on one side; the larger of the two boards contains a vast majority of components; on the other side of the board, a display 2 is glued.

The smaller board is an internal multiplexer board; it has a power connector 4 for powering the main unit 47 and 6 ports 18 for connecting the sensors. The boards are stored in a box 1 measuring 14.8 × 7.9 × 2.5 cm. The display 2 is located on the front side of the board, the power connector 4 and outlet connectors 5 for connecting individual sensors can be seen on the bottom side. It is mechanically impossible to connect the power connector 4 to the sensor outlet connector 5 or vice versa. Ports 18 are IP67 waterproof. From the top, there is an inlet 3 for possible connection of an external antenna.

### Description of function

The main processor 6 of the main unit 47, in cooperation with the internal multiplexer board, communicates with individual connected sensors via I2C interface. The data obtained from the sensors are then interpreted, verified for integrity and validity, and sent to the processing unit 41 or, in the event of a connection failure, stored for later transmission. The main processor 6 of the main unit 47, which allows sending via Wi-Fi technology or an LTE modem 8, with which the main processor 6 communicates via the UART bus, is used to send data. In the background, the main processor 6 of the main unit 47 also generates operational records, containing information about the operation of the equipment, potential problems, etc. These records are then also sent to the processing unit 41 and, in the event of a connectivity failure, stored for later retrieval or, depending on the current settings, output to the display 2.

Parallel to this, the main unit 47 manages connectivity, provides remote access, processes received commands, etc. The main unit 47 also includes a system for managing user licenses. This system allows, for example, one entity, i.e. a natural or legal person, as well as the lessor, to lease the main unit/units 47 to another entity - the lessee and, in the event of non-compliance with the terms of the lease agreement, remotely withdraw the license, preventing the lessee from further using the unit. The lessor may have very limited access to the data of the main unit 47 and thus does not obtain the lessee's private information. The main unit 47 also manages its firmware update and can provide firmware update for some of the connected sensors. Each master unit 47 can have different settings. The settings include, for example, information necessary to connect to a local Wi-Fi network, information necessary to establish a mobile LTE connection, and more. The main unit 47 manages this setting, which can be modified from the management applications 48.

### Sensors

The sensors connect to the main unit 47 into ports 18 designed for this purpose. It can then read the measured quantities from these sensors and send them to the processing unit 41.

Probe thermometer, description of function.

The probe thermometer is inserted into a so-called python - a bundle that contains pipes with beverages and pipes with a coolant. The temperature in the python affects the resistance of the thermistor 20. By means of a resistance divider, the said resistance is converted to voltage. This is then measured by the ADC converter of the main processor 21 of the probe thermometer, and is converted to temperature. This is then periodically read out by the main unit 47.

Ultrasonic flowmeter, description of function.

The flowmeter uses ultrasonic pulses emitted by ultrasonic transducers 28 to measure the time from the signal being sent to its reception downstream of the liquid flowing through tube 30 and upstream of that liquid. It then calculates the flow velocity of the liquid from the difference of the two times. From the knowledge of the mechanical dimensions of the tube 30, it then calculates the draught. Using a colour sensor 29, the flowmeter distinguishes which liquid is currently flowing through it. The liquid is illuminated by a white LED diode 31 to recognize the colour. Using a sponge counter, consisting of a sponge counter processor 25 and an infrared gateway, consisting of an IR LED 32 and an IR transistor 33, the flowmeter can then detect the sponge passage used for sanitation through the tube 30. On demand, it can send measured quantities to the main unit 47, to which it can be connected via a connection connector 23.

Mechanical flowmeter, description of function.

A magnet is attached to a propeller 39. Through the passage of the liquid, the propeller 39 spins, which is then sensed by a Hall sensor 38 and converted into a signal of a certain frequency, measured by the main processor 37 of the mechanical flowmeter. The current frequency is then read by the main unit 47, to which the sensor is connected via a connector 35.

Additional sensors, actuators and compatible hardware.

Thermometers, designated T1 to T5, measure the temperature in different locations to detect possible cooling failures, compressor failures of the refrigeration equipment and more. Thermometers are used to measure temperature in the following locations:
- Water inside the cooling equipment, near the surface
- Water inside the cooling equipment, below the surface
- Compressor inlet
- Compressor outlet
- Motor

Barrel tapping detector - the sensor calculates the barrels being tapped.

Thermometer and hygrometer is designed to measure temperature and humidity in the motor compartment of the cooling equipment; it can detect any leakage of process fluids by increased humidity. Gives the main unit information about the mentioned temperature and humidity.

The pressure sensor monitors whether the pipe pressure has fallen below the limit where frothing of draughted beverages would be impermissible or, conversely, has not risen above the limit where the taste of the beverage would be affected.

Support for automatic sanitation and actuators - support for switching pumps, valves, pulse width modulation control and more - at both sw and hw levels. The system is therefore ready to support automatic sanitation, device switching, etc.

The thermostatic controller for the cooling equipment is used to maintain the temperature of the cooling equipment. It is connected to the main unit 47 as a sensor and serves as a replacement for the original mechanical bimetallic thermostatic controller of the cooling equipment. Allows setting of control loop parameters, remote control of the cooling equipment and reading of the current temperature.

A backup power supply 50 is used to backup the power of the entire equipment in the event of a network failure.

An external mux 51, i.e. an expansion module is a device used to expand the number of sensors that can be connected to the main unit 47. The extension is 7 ports to one connected external mux 51. It is therefore possible to connect up to 48 sensors/actuators to the main unit 47 using external muxes 51.

Frontend application. Various applications have been developed to manage individual master units. These use both REST API processing units and the processing unit mediated by the MQTT broker for direct communication with the units using their command line.

The main unit 47 shown in Fig. 2 consists of the following modules:

A graphic LCD display 2 with backlight is connected to the processor. It can display various information, operating variables, operating records, etc., depending on the current settings. The main processor 6 of the unit provides communication with sensors, data encryption and more. It also provides connectivity via Wi-Fi. A level translator 7 is used to convert voltage levels in order to enable communication between the main processor and an LTE modem 8, which is used to provide communication via LTE. It is necessary to insert a SIM card into the equipment in order for the LTE modem 8 to function properly; without a SIM card, only Wi-Fi connection works. An RF switch 9 is controlled from the main processor and allows switching between internal and optional external antennas. A secure element 10 provides cryptography-related operations, increasing their security and speed. A +3.3 V stabilizer 11, a +3.85 V stabilizer 12 and a +9.8 V stabilizer 13 convert 12 V voltages into voltages used in other parts of the system. The 3.3-V voltage is used to power the main processor, the 3.85 V to power the LTE modem 8, the 9.8 V to power the sensors. An I2C mux 15 multiplexer provides communication between the main processor and connected sensors. Flat flex connectors 16, 17 are used for connecting boards. The unit contains 2 physical circuit boards as indicated in Fig. 2. The main board and the internal mux board. These 2 boards are connected by flat flex connectors 16, 17. A power connector 4 is used to power the main unit 47. This then converts the voltage applied through this power connector 4 into various other voltages used by the system using stabilizers 11 to 14. The internal mux board 18 contains six waterproof connectors. The connector board is located at the bottom of the cover box 1 as shown in Fig. 1.

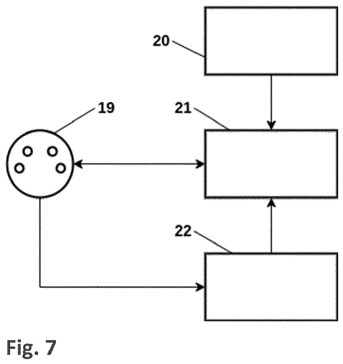

Probe thermometer according to Fig. 7 includes a connector 19, which is used for connection to the main unit 47, power supply and communication. A thermistor 20 changes its resistance with temperature; by means of a resistive divider, this resistance is then converted into a voltage, which is measured by the main processor 21 of the probe thermometer, which handles communication over I2C and the measurement and processing itself. A +3V3 STAB linear stabilizer 22 converts the voltage of 9.8 V from the unit to a voltage of 3.3 V for the main processor of the probe thermometer. The stabilizer block includes reverse polarity protection.

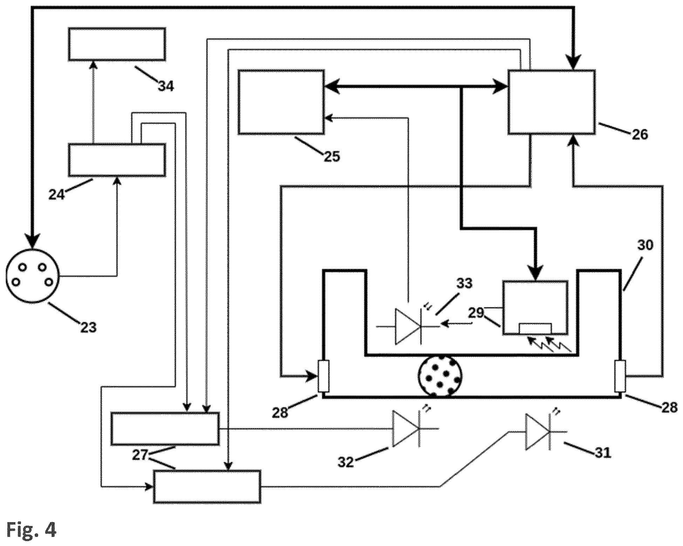

The ultrasonic flowmeter according to Fig. 4 includes a connector 23, which is used for connection to the main unit 47, power supply and communication. A 5V STAB switching power supply 24 converts the 9.8-V voltage provided by the main unit 47 to 5 V, which is used to power the IR LED for counting sponges and the white LED for distinguishing water from beer; the 5 V is subsequently converted to 3.3 V to power the other components. A 3in3 STAB linear stabilizer 34 converts the voltage from 5 V to 3.3 V. The main processor 21 of the probe thermometer, the sponge counting processor and the colour sensor are powered from this lower voltage. In addition to the voltage reduction itself, there is also filtration and suppression of the power drop to a certain extent.

The sponge counter uses a processor 25 different from the main one. The infrared LED 32 together with the photodiode 33 form a light barrier, interrupted by the movement of the sponge in the tube 30 through which the liquid flows, i.e. water or beer, or other. The infrared beam from the current-controlled LED hits the photodiode, the signal is then introduced into the sponge counter processor. It processes this signal and provides the sponge counting information to the main processor. The main processor 26 of the ultrasonic flowmeter solves the actual measurement of the flow velocity of the liquid in the tube 30. It also provides communication via the external I2C bus with the main unit 47 and via the internal I2C bus with the sponge counter and the colour sensor. It also collects additional information for debugging and analytics purposes, which it is then also able to send to the main unit 47 upon request. Current sources 27 provide LED power - IR and white, using constant current. Waterproof transducers 28 with a resonance frequency of about 1 MHz convert the electrical signal generated by the processor into ultrasound, or, vice versa, convert the sound wave into an electrical signal. With their help, the main processor 26 of the ultrasonic flowmeter can measure the speed of ultrasonic propagation in the liquid. This is then indirectly dependent on the flow velocity of the liquid and therefore on the flow rate. A colour sensor 29 is used to detect the colour of the liquid, allowing water to be distinguished from beer. The colour sensor 29 is connected via an internal I2C bus, the same as the sponge counter. The colour sensor 29 is illuminated by a white LED 31 powered by a current source that is part of the liquid colour recognition system. The source can be controlled from the main processor and the LED can be switched on and off at will. An IR LED 32 is powered by a current source and serves as part of the sponge counting system. The source can be controlled from the main processor. An IR photodiode 33 together with the IR LED 32 form an infrared barrier. As the sponge passes through tube 30, the infrared beam is interrupted and the sponge is detected by processor 25 for sponge counting.

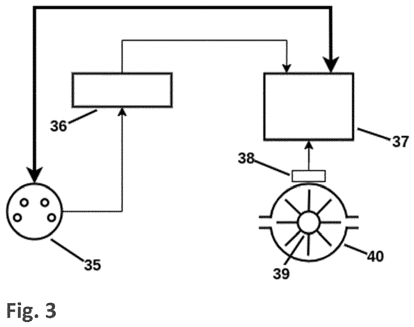

Mechanical flowmeter according to Fig. 3 includes a power and communication connector 35 that supplies a voltage of 9.8 V from the main unit 47 and mediates communication with this main unit 47. A +3v3 STAB linear stabilizer 36 converts a voltage of 9.8 V from the unit to a voltage of 3.3 V for an STM32 processor. The stabilizer block includes reverse polarity protection. The main processor 37 of the mechanical flowmeter provides communication over I2C and the measurement itself and its processing. - HAL sensor - Hall sensor 38 of the magnetic field, detects the rotation of a propeller 39 with an attached magnet. Due to the flowing liquid, the propeller 39 with the magnet spins. The reorientation of the magnet is then detected by the HAL sensor 38. A sensor body 40 allows fluid to flow and holds the propeller 39 to rotate freely.

The processing unit 41 and related architecture and infrastructure according to Fig. 5. A processing unit 41 generally refers to a part of the system that is not accessed directly by the user. It is mainly used to process data from individual master units 47, to allow access to such data, to store data and to provide support for third-party applications. A database 42 allows storage of measured metrics from main units 47, operational records, logistic information and other data and access to the remaining components of the processing unit 41. Optionally, the processing unit may include auxiliary tools 43, enabling data visualization and analysis. An MQTT broker 44 provides secure collection of sensor data and telemetry data from individual master units 47. At the same time, it provides communication between frontend applications and master units, allowing users and applications direct access to the command line of the units and thus ensuring the possibility of automation. It also ensures the collection of operational records from main units 47. The master code 45 of the processing unit 41 exposes an encrypted REST API interface through which frontend applications can access data stored in the database, manage user accounts, register and unregister master units, modify information, etc. This allows frontend applications to access the database, access operational records, access logistics information regarding individual units, etc. Individual main units 47 communicate via network infrastructure 46, such as Wi-Fi and LTE, using relevant network infrastructure - routers, switches, routers, BTS, etc. The main units 47 collect sensor data and send it to the processing unit 41. Management applications 48 running on the user computer access the processing unit 41 using REST API and MQTT. They can access measurement data, view operational records, visualize data, perform analysis over them and more. Mobile applications 49 access the REST API processing unit to visualize the data.

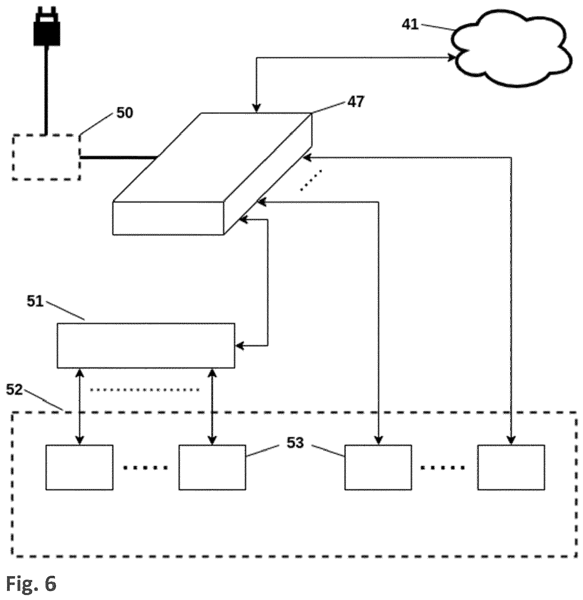

The wiring of the main unit 47 is shown in Fig. 6. It includes a backup power supply 50. The main unit 47 is powered by electrical distribution. In the event of a mains voltage failure, a proprietary power backup unit can optionally be connected. Main units 47 send data to the processing unit 41. An external mux 51 is connected to the main unit 47 and allows additional sensors to be connected. The measured environment 52 consists of cooling equipment, tap equipment, etc., monitored by the sensors used. Sensors 53 and actuators measure various quantities and have the form of thermometers, flow meters, etc., and actuators have the form of relays, pumps, etc.

### Industrial Applicability

According to this technical solution, the system can be used especially for monitoring and regulating restaurant equipment, especially tap and cooling equipment.

## Claims

1. System for monitoring and regulating restaurant equipment and monitoring the condition of tap piping ***characterized in that*** it includes at least one main unit (47) comprising a main processor (6), wherein at least one sensor selected from a group consisting of a probe thermometer, ultrasonic flowmeter, mechanical flowmeter, thermometer, pressure sensor is connected to the main unit (47), wherein at least one main unit (47) is connected to a processing unit (41) comprising a database (42), wherein the processing unit (41) is designed to process data from individual main units (47) and to store and access stored data and is provided with remote data management and visualisation tools.

2. A system for monitoring and regulating restaurant equipment according to claim 1 ***characterized in that*** an additional sensor/actuator selected from a group consisting of a hygrometer, thermostatic controller, barrel tapping detector and relay for switching appliances is connected to at least one main unit (47).

3. A system for monitoring and regulating restaurant equipment according to claim 1 or 2 ***characterized in that*** pump, valve and automatic sanitation switches are connected to at least one main unit (47).

4. A system for monitoring and regulating restaurant equipment according to any of claims 1 to 3 ***characterized in that*** it is provided with a backup power supply (50).

5. A system for monitoring and regulating restaurant equipment according to any of claims 1 to 4 ***characterized in* that** the ultrasonic flow meter is provided with a sensor for automatically detecting the sanitation of the tap piping performed.

6. A system for monitoring and regulating restaurant equipment according to any of claims 1 to 5 ***characterized in that*** the ultrasonic flowmeter is provided with automatic counting of sanitation sponges, insertable into the tap piping.

7. A system for monitoring and regulating restaurant equipment according to any of claims 1 to 6 ***characterized in that*** at least one master unit (47) is provided with a system for remotely updating the firmware of the unit and/or connected sensors supporting this functionality.

8. A system for monitoring and regulating restaurant equipment according to any of claims 1 to 7 ***characterized in that*** it is provided with means for automating and/or diagnosing and/or controlling connected actuators.

9. A system for monitoring and regulating restaurant equipment according to any of claims 1 to 8 ***characterized in that*** at least one of the sensors connectable to at least one main unit (47) is provided with means for reading data from the sensor, without explicitly providing support on the main unit side (47).

10. A system for monitoring and regulating restaurant equipment according to any of claims 1 to 9 ***characterized in that*** at least one main unit (47) is provided with a device for encrypting the transmitted data, and the processing unit (41) is provided with a device for verifying the identity of individual main units (47); and vice versa, these are provided with a device for verifying the identity of the processing unit (41).

11. A system for monitoring and regulating restaurant equipment according to any of claims 1 to 10 ***characterized in that*** the main unit (47) and the processing unit (41) are provided with tools for remotely adjusting the range of functionality of the system.

12. A system for monitoring and regulating restaurant equipment according to any of claims 1 to 11 ***characterized in that*** the main units (47) are provided with an internal storage for storing the measured values at the time of a connection failure and for sending them to the processing unit (41).
